# EUROPÄISCHE PATENTSCHRIFT

(11) **EP 1 320 946 B1**
(45) Veröffentlichungstag und Bekanntmachung des Hinweises auf die Patenterteilung: **04.06.2008**
(21) Anmeldenummer: 01978119.4
(22) Anmeldetag: 11.09.2001
(51) Int. Cl.: H04B 7/005

(54) **VERFAHREN ZUR REGELUNG DER SENDELEISTUNG IN EINEM FUNKSYSTEM UND ENTSPRECHENDE SENDEVORRICHTUNG**
METHOD FOR CONTROLLING THE TRANSMITTING POWER IN A RADIO SYSTEM AND A CORRESPONDING TRANSMITTING DEVICE
PROCEDE DE REGULATION DE LA PUISSANCE D'EMISSION DANS UN SYSTEME RADIO, ET DISPOSITIF D'EMISSION CORRESPONDANT

(30) Priorität: 29.09.2000 DE 10048403
(43) Veröffentlichungstag der Anmeldung: 25.06.2003
(73) Patentinhaber: SIEMENS AKTIENGESELLSCHAFT, 80333 München (DE)
(72) Erfinder: RAAF, Bernhard, 81475 München (DE); SENNINGER, Christian, 82515 Wolfratshausen (DE)
(74) Vertreter: Samson & Partner
(86) Internationale Anmeldenummer: PCT/DE2001/003492
(87) Internationale Veröffentlichungsnummer: WO 2002/027965

(56) Entgegenhaltungen:
- US-A- 5 896 411
- "UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)" ETSI TS 125 214 V3.4.0, XX, XX, September 2000 (2000-09), Seiten 1-48, XP002166612

## Beschreibung

Die vorliegende Erfindung betrifft ein Verfahren zur Regelung der Sendeleistung in einem Funksystem, insbesondere einem Mobilfunksystem, nach dem Oberbegriff des Anspruchs 1 sowie eine entsprechend ausgestaltete Sendevorrichtung.

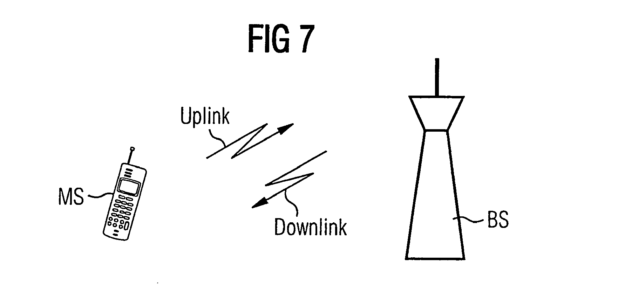

Nachfolgend soll zunächst das herkömmliche Verfahren zur Regelung der Sendeleistung in einem Mobilfunksystem unter Bezugnahme auf Figur 7 erläutert werden.

Dieser Art von Verfahren ist aus den Dokument "Universal" Mobile Telecommunications System (UMTS), Physical Layer Procedures (FDD), ETSI TS 125 214 V3.4.0, September 2000" bekannt.

Eine Mobilstation MS, deren Sendeleistung geregelt werden soll, erzeugt ein Pilotsignal mit einem oder mehreren Pilotbits, welches über den sogenannten "Uplink"-Kanal an eine Basisstation BS des Mobilfunksystems übertragen wird. Die Basisstation BS wertet das von der Mobilstation MS empfangene Pilotsignal aus, um davon abhängig das Signal-Interferenz-Verhältnis ("Signal to Interference Ratio", SIR) zu bestimmen und mit einem vorgegebenen Sollwert zu vergleichen. Die Basisstation BS erzeugt abhängig von dem Vergleichsergebnis einen Leistungsregelungsbefehl zur Regelung der Sendeleistung der Mobilstation MS, welcher über den sogenannten "Downlink"-Kanal an die Mobilstation MS übertragen und von dieser entsprechend umgesetzt wird. Der Leistungsregelungsbefehl weist dabei die Mobilstation MS insbesondere an, ihre Sendeleistung gemäß einer bestimmen Schrittweite zu erhöhen oder zu erniedrigen bzw. unverändert zu lassen. Der Leistungsregelungsbefehl kann daher im Prinzip lediglich ein Bit umfassen, welches die Mobilstation MS in Abhängigkeit von seinem Wert anweist, die Sendeleistung der Mobilstation MS zu erhöhen bzw. zu erniedrigen.

Bei der Einstellung ihrer Gesamtsendeleistung muss die Mobilstation MS nicht nur die von der Basisstation BS empfangenen Leistungsregelungsbefehle berücksichtigen, sondern auch als "Gain"-Faktor bezeichnete Gewichtungsparameter, welche die Gewichtung des Sendeleistungsanteils eines dem Uplink-Kanal zugeordneten Steuerkanals ("Dedicated Physical Control Channel", DPCCH) bzw. die Gewichtung des Sendeleistungsanteils eines dem Uplink-Kanal zugeordneten Datenkanals ("Dedicated Physical Data Channel", DPDCH) beschreiben. Jeder physikalische Übertragungskanal ("Dedicated Physical Channel", DPCH) setzt sich aus einem derartigen Steuerkanal, über den unter anderem das zuvor erwähnte Pilotsignal übertragen wird, und keinem, einem oder mehreren Datenkanälen zusammen. Die zuvor beschriebenen "Gain"-Faktoren verändern sich beispielsweise, wenn sich die Datenrate eines Datenkanals oder die Anzahl der Datenkanäle der Mobilstation MS verändert.

Bei der Regelung bzw. Einstellung der Sendeleistung der Mobilstation MS muss eine maximale bzw. minimale Sendeleistungsgrenze beachtet werden. Die Mobilstation MS kann beispielsweise die maximale Sendeleistungsgrenze aufgrund eines Leistungsregelungsbefehls der Basisstation BS, welche eine Erhöhung ihrer Sendeleistung zur Folge hat, oder einer Neueinstellung des zuvor erwähnten "Gain"-Faktors erreichen bzw. überschreiten. Des weiteren kann die Mobilstation MS die minimale Sendeleistungsgrenze aufgrund eines von der Basisstation BS empfangenen Leistungsregelungsbefehls, welcher eine Verringerung der Sendeleistung zur Folge hat, oder einer Neueinstellung der "Gain"-Faktoren, erreichen bzw. unterschreiten. Gemäß dem derzeitigen Stand der Standardisierung von UMTS-Mobilfunksystemen ("Universal Mobile Telecommunication System") kann die maximale Sendeleistung der Mobilstation MS abhängig von der jeweils gewählten Leistungsklasse zwischen 21 dBm und 33 dBm liegen. Insbesondere in Mobilfunksystemen, welche gemäß der sogenannten CDMA-Technologie ("Code Division Multiple Access") betrieben werden, ist es von größter Wichtigkeit, dass die maximale Sendeleistungsgrenze nicht überschritten wird, da dann durch die Mobilstation der Uplink-Kanal von weiteren in derselben Zelle befindlichen Mobilstationen gestört werden würde.

Zur Berücksichtigung der maximalen bzw. minimalen Sendeleistungsgrenze wurde für UMTS-Mobilfunksysteme eine Skalierung der Sendeleistung der Mobilstation MS vorgeschlagen, welche beispielsweise durch eine Begrenzung der Sendeleistung auf die maximale bzw. minimale Sendeleistung oder durch eine Abschwächung einer angeforderten Sendeleistungserhöhung bzw. Sendeleistungserniedrigung realisiert sein kann.

Insbesondere für das Verhalten der Mobilstation MS an der oberen Sendeleistungsgrenze wird vorgeschlagen, die Sendeleistung auf die maximale Sendeleistung zu begrenzen, falls aufgrund eines Leistungsregelungsbefehls der Basisstation BS und/oder veränderter "Gain"-Faktoren eine Sendeleistung angefordert wird, welche die maximale Sendeleistungsgrenze überschreiten würde. D.h., die maximale Sendeleistungsgrenze wird auf keinen Fall überschritten. Wird anschließend beispielsweise aufgrund einer "Gain"-Faktor-Neueinstellung eine Sendeleistungsreduktion angefordert, wird der zu reduzierende Sendeleistungsbetrag von dem Betrag der maximalen Sendeleistung abgezogen und mit dem daraus resultierenden Sendeleistungswert gesendet. Diesbezüglich sei beispielsweise angenommen, dass die Mobilstation MS über einen Übertragungskanal mit einer Sendeleistung sendet, welche 1 dB unterhalb der maximalen Sendeleistung liegt. Soll nun beispielsweise die Datenrate des entsprechenden Datenkanals verdoppelt werden, müsste die Gesamtsendeleistung um ca. 3 dB angehoben werden und läge somit 2 dB über der maximalen Sendeleistung. In diesem Fall wird die Gesamtsendeleistung der Mobilstation MS auf die maximale Sendeleistung begrenzt. Soll nun nach einiger Zeit die Datenrate wieder auf den ursprünglichen Datendurchsatz reduziert werden, wird nach der herkömmlichen Vorgehensweise die daraus resultierende Sendeleistungsreduktion in Bezug auf die maximale Sendeleistung durchgeführt, d.h. die maximale Sendeleistung wird um 3 dB reduziert, und mit der daraus resultierenden Sendeleistung wird gesendet, was jedoch eine um 2 dB zu niedrige Sendeleistung zur Folge hat, welche anschließend durch den zwischen der Mobilstation MS und der Basisstation BS bestehenden Leistungsregelkreis ausgeregelt werden muss.

Ein ähnliches Verfahren tritt gemäß dem Stand der Technik an der minimalen Sendeleistungsgrenze auf, d.h. auch an der minimalen Sendeleistungsgrenze kann bei einer Begrenzung bzw. Skalierung der Sendeleistung mit einer anschließenden Sendeleistungserhöhung aufgrund einer "Gain"-Faktor-Neueinstellung eine Sendeleistung eingestellt werden, welche gegenüber der tatsächlich angeforderten Sendeleistung zu hoch ist und damit nicht der Realität entspricht.

Grundsätzlich ist gemäß dem Stand der Technik der Mobilstation MS das Unterschreiten der minimalen Sendeleistungsgrenze freigestellt. Akzeptiert die Mobilstation MS das Unterschreiten der minimalen Sendeleistungsgrenze nicht, würde bei einer angeforderten Reduktion der Sendeleistung, welche ein Unterschreiten der minimalen Sendeleistungsgrenze zur Folge hat, die Sendeleistung auf die minimale Sendeleistung begrenzt werden. Die Mobilstation MS würde sich somit äquivalent zu den oben beschriebenen Regeln verhalten, welche im Bereich der maximalen Sendeleistungsgrenze gelten, so dass sich ebenfalls das Problem ergibt, dass bei einer nachfolgenden Sendeleistungserhöhung aufgrund einer "Gain"-Faktor-Neueinstellung der entsprechende Differenzbetrag zu dem Wert der minimalen Sendeleistung hinzuaddiert und anschließend mit der daraus resultierenden Sendeleistung gesendet wird.

Für den Fall, dass die Mobilstation MS das Unterschreiten der minimalen Sendeleistungsgrenze unterstützt, ist gemäß dem Stand der Technik eine Skalierung derart vorgesehen, dass die Gesamtsendeleistung nach der Skalierung weder größer als die minimale Sendeleistungsgrenze noch größer als die zuvor eingestellte Gesamtsendeleistung ist, und dass die Größe der Gesamtsendeleistungsreduktion nach dem Anwenden der Skalierung die Größe der Leistungsreduktion vor der zusätzlichen Skalierung nicht überschreitet. Bei einer Erhöhung der Sendeleistung soll hingegen keine Skalierung angewendet werden. Dies bedeutet, dass bei Erreichen bzw. Unterschreiten der minimalen Sendeleistungsgrenze jede angeforderte Sendeleistungsreduktion skaliert und beispielsweise durch Multiplikation mit dem Faktor 1/4 abgeschwächt wird, während jede angeforderte Sendeleistungserhöhung ohne Restriktionen umgesetzt wird.

Sollte die Mobilstation MS das zuvor beschriebene Unterschreiten der minimalen Sendeleistungsgrenze unterstützen, tritt ebenfalls das zuvor erläuterte Problem einer nach Überschreiten der minimalen Sendeleistungsgrenze zu hohen Sendeleistungseinstellung, jedoch in etwas abgeschwächter Art und Weise, auf.

Der vorliegenden Erfindung liegt daher die Aufgabe zugrunde, ein verbessertes Verfahren zur Regelung der Sendeleistung in einem Funksystem sowie eine entsprechende Sendevorrichtung vorzuschlagen, wobei eine schnellere Einstellung der Sendeleistung auf den geforderten Sollwert möglich ist und insbesondere die zuvor beschriebenen unerwünschten bzw. unbeabsichtigten Einstellungen der Sendeleistung an der oberen bzw. unteren Sendeleistungsgrenze vermieden werden können.

Diese Aufgabe wird erfindungsgemäß durch ein Verfahren mit den Merkmalen des Anspruchs 1 bzw. eine Sendevorrichtung mit den Merkmalen des Anspruchs 23 gelöst. Die Unteransprüche definieren jeweils bevorzugte und vorteilhafte Ausführungsformen der vorliegenden Erfindung.

Erfindungsgemäß ist vorgesehen, dass nach einer Skalierung oder Beschränkung der Sendeleistung nach Wieder-Überschreiten des maximalen Sendeleistungsgrenzwerts bzw. Wieder-Unterschreiten des minimalen Sendeleistungsgrenzwerts bei Vorliegen einer Anforderung zur Veränderung der Sendeleistung, welche auf eine Veränderung der "Gain"-Faktoren zurückgeht, die Schrittweite, mit welcher die Sendeleistung des Senders eingestellt wird, während einer bestimmten Übergangsperiode vorübergehend erhöht wird, falls infolge der auf die Veränderung der "Gain"-Faktoren zurückzuführenden Änderung der Sendeleistung der maximale Sendeleistungsgrenzwert wieder unterschritten bzw. der minimale Sendeleistungsgrenzwert wieder überschritten wird.

Mit Hilfe dieser Maßnahme kann der jeweilige Sender schneller in den eingeregelten Zustand zurückkehren, und die Sendeleistung kann in der Regel schnell dem jeweils geforderten Sendeleistungssollwert angeglichen werden. Zudem kann bei Rückkehr in den normalen (unskalierten) Arbeitsbereich der Anfangswert für die nachfolgende Sendeleistungsregelung besser gewählt werden.

Vorteilhafterweise wird die Dauer dieser Übergangsperiode und/oder der Wert der erhöhten Schrittweite während dieser Übergangsperiode in Abhängigkeit von den veränderten "Gain"-Faktoren derart gewählt, dass die Übergangsperiode umso länger und/oder die Schrittweite während der Übergangsperiode umso stärker erhöht wird, je stärker die durch die Veränderung der "Gain"-Faktoren hervorgerufene Sendeleistungsänderung ist. D.h. wird beispielsweise die von dem Sender zu tragende Datenrate bei Verlassen der minimalen Sendeleistungsgrenze relativ stark erhöht, wird erfindungsgemäß entsprechend die Übergangsperiode verlängert und/oder die Schrittweite entsprechend stark erhöht.

Erfindungsgemäß kann zudem vorzugsweise kontinuierlich der einem von der Basisstation empfangenen Leistungsregelungsbefehl und dem augenblicklichen Wert der "Gain"-Faktoren tatsächlich entsprechende, unskalierte bzw. unbegrenzte Sendeleistungswert ermittelt und bei der Einstellung der Sendeleistung der Mobilstation berücksichtigt werden, falls die Veränderung dieses unskalierten Sendeleistungswerts auf eine Veränderung der "Gain"-Faktoren zurückzuführen ist. Dies gilt insbesondere für den Fall, dass aufgrund einer durch die Veränderung der "Gain-"Faktoren angeforderten Sendeleistungsveränderung der maximale Sendeleistungsgrenzwert wieder unterschritten bzw. der minimale Sendeleistungsgrenzwert wieder überschritten wird.

Zur Ermittlung der von dem System tatsächlich angeforderten Sendeleistung kann eine Variable verwendet werden, die einer imaginären Sendeleistungseinstellung entspricht.

Hinsichtlich der maximalen Sendeleistungsgrenze kann erfindungsgemäß weiterhin vorgesehen sein, die Sendeleistung der Mobilstation auf den maximalen Sendeleistungsgrenzwert zu beschränken. Sollte anschließend aufgrund einer Veränderung der "Gain"-Faktoren eine Reduzierung der Sendeleistung angefordert werden, kann der entsprechende Leistungsdifferenzwert von der imaginären Leistungseinstellung reduziert und mit der daraus resultierenden Leistung, falls diese kleiner als der maximale Sendeleistungsgrenzwert ist, gesendet werden.

Auch bei Begrenzung der Sendeleistung auf den minimalen Sendeleistungsgrenzwert kann bei Anforderung einer Sendeleistungserhöhung durch eine "Gain"-Faktor-Neueinstellung der entsprechende Leistungsdifferenzwert zu dem imaginären Sendeleistungswert hinzuaddiert und mit der daraus resultierenden Sendeleistung gesendet werden, falls diese größer als die minimale Sendeleistungsgrenze ist.

Lässt die Mobilstation hingegen ein Unterschreiten der minimalen Sendeleistungsgrenze mit einer entsprechenden Skalierung zu, empfiehlt es sich, den imaginären Sendeleistungswert bzw. die entsprechende Variable stets der aktuellen Sendeleistung gleichzusetzen.

Die zuvor beschriebene erfindungsgemäße Erhöhung der Schrittweite während der erwähnten Übergangsperiode kann vorteilhaft mit dem ebenfalls zuvor erwähnten Prinzip einer imaginären Sendeleistungseinstellung unter Verwendung einer entsprechenden Variablen kombiniert werden. Ebenso ist die Erfindung jedoch auch ohne diese imaginäre Sendeleistungseinstellung oder Sendeleistungsnachführung einsetzbar.

Des Weiteren eignet sich die vorliegende Erfindung insbesondere zum Einsatz in UMTS-Mobilfunksystemen, wobei jedoch die vorliegende Erfindung allgemein in jedem Funksystem anwendbar ist, wo eine Regelung der Sendeleistung eines Senders herbeigeführt werden soll. Des weiteren wird die Erfindung im Rahmen der vorliegenden Patentanmeldung zur Verdeutlichung anhand des Beispiels der Sendeleistungsregelung der Mobilstation in einem Mobilfunksystem beschrieben. Selbstverständlich ist die vorliegende Erfindung jedoch grundsätzlich auch auf die Regelung der Sendeleistung einer Basisstation anwendbar.

Die vorliegende Erfindung wird nachfolgend näher anhand bevorzugter Ausführungsbeispiele unter Bezugnahme auf die beigefügte Zeichnung erläutert.
Figur 1 - Figur 3 zeigen Darstellungen zur Erläuterung der vorliegenden Erfindung anhand eines ersten Ausführungsbeispiels,
Figur 4 - Figur 6 zeigen Darstellungen zur Erläuterung der vorliegenden Erfindung anhand eines zweiten Ausführungsbeispiels, und
Figur 7 zeigt eine Darstellung zur Erläuterung der Kommunikation zwischen einer Mobilstation und einer Basisstation in einem Mobilfunksystem.

Im Rahmen der vorliegenden Erfindung wird vorgeschlagen, nach einer Skalierung der Sendeleistung bei Verlassen der jeweiligen Sendeleistungsgrenze, d.h. bei Unterschreiten der maximalen Sendeleistungsgrenze bzw. Überschreiten der minimalen Sendeleistungsgrenze, für die Dauer einer bestimmten Übergangsperiode die Sendeleistung des Senders mit einer um einen bestimmten Betrag erhöhten Schrittweite einzustellen. Diese Maßnahme kann auf besonders vorteilhafte Art und Weise mit einem speziellen Skalierungsverfahren kombiniert werden, wonach die vom System tatsächlich geforderte Sendeleistung in Form einer Variablen Ptrace gemerkt wird, um bei einer angeforderten Veränderung der Sendeleistung, welche auf veränderte "Gain"-Faktoren zurückgeht und zu einem Unterschreiten der maximalen Sendeleistungsgrenze bzw. zu einem Überschreiten der minimalen Sendeleistungsgrenze führt, die Sendeleistung entsprechend dieser Variablen Ptrace einzustellen.

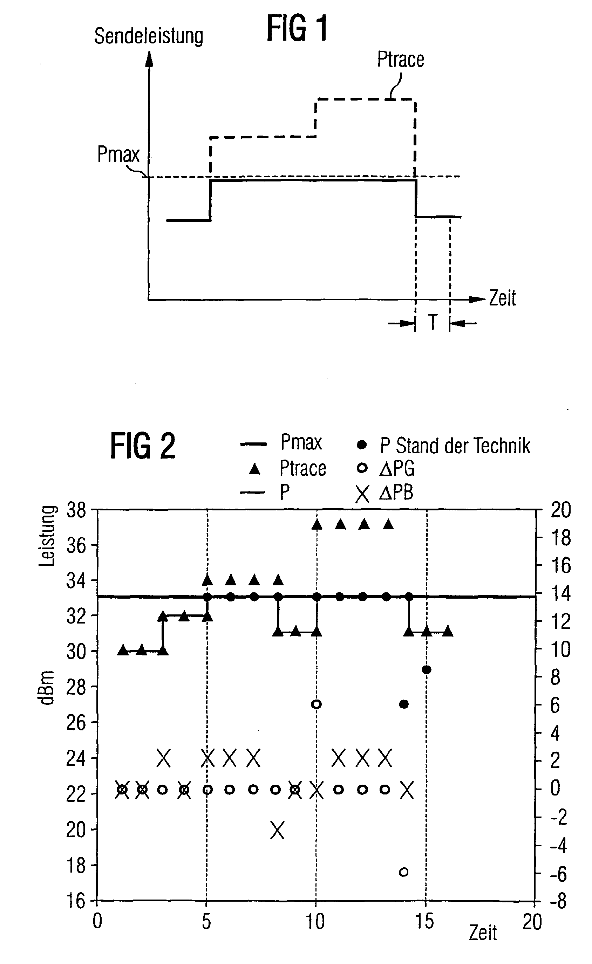

Dies soll nachfolgend näher anhand der Darstellung von Figur 1 erläutert werden, wobei hier insbesondere das Beispiel einer Skalierung im Bereich der oberen Sendeleistungsgrenze dargestellt ist.

Wie aus Figur 1 ersichtlich ist, wird für den Fall, dass von dem System eine Sendeleistung gefordert wird, welche größer als die maximale Sendeleistungsgrenze Pmax ist, stets mit dem Wert dieser maximalen Sendeleistung Pmax gesendet.

Mit Hilfe der Variablen Ptrace wird kontinuierlich die von dem System geforderte Sendeleistung, insbesondere die von dem System geforderte Sendeleistung, welche die maximale Sendeleistungsgrenze Pmax überschreitet, gemerkt. Überschreitet die vom System geforderte Sendeleistung die maximale Sendeleistungsgrenze Pmax, wird jedoch nicht mit Ptrace gesendet, sondern - wie bereits erwähnt worden ist - mit der maximal erlaubten Sendeleistung Pmax. Solange die Mobilstation MS von der Basisstation Befehle zur Erhöhung der Sendeleistung erhält, wird weiterhin mit der erlaubten maximalen Sendeleistung Pmax gesendet und der Wert der Variable Ptrace bleibt unverändert. Sollte die Mobilstation MS jedoch aufgrund von veränderten "Gain"-Faktoren die Sendeleistung erhöhen wollen, obwohl Ptrace bereits über der maximalen Sendeleistungsgrenze Pmax liegt, soll trotzdem der entsprechende Leistungsdifferenzwert zu Ptrace hinzuaddiert werden, wobei jedoch nach wie vor mit der maximal erlaubten Sendeleistung Pmax gesendet wird.

Erhält die Mobilstation MS von der Basisstation einen Befehl zur Verringerung der Sendeleistung, soll der entsprechende Leistungsdifferenzwert von der erlaubten maximalen Sendeleistung abgezogen und mit dem daraus resultierenden Sendeleistungswert gesendet werden, wie es auch gemäß dem Stand der Technik vorgesehen ist. Sollte die Mobilstation MS jedoch die Sendeleistung aufgrund von veränderten "Gain"-Faktoren verringern wollen, soll der entsprechende Leistungsdifferenzwert von der Variable Ptrace abgezogen und mit dem daraus resultierenden Sendeleistungswert gesendet werden (falls dieser kleiner als der maximale Sendeleistungsgrenzwert ist).

Mit Hilfe der Variablen Ptrace wird somit jede "Gain"-Faktor-Neueinstellung verfolgt.

Die Einstellung der Sendeleistung der Mobilstation MS erfolgt in der Regel mit einer konstanten Schrittweite, d.h. die Sendeleistung der Mobilstation MS wird in der Regel um einen konstanten Wert verändert. Sobald durch die Sendeleistung jedoch wieder die maximale Sendeleistungsgrenze Pmax unterschritten wird, wird für die Dauer T einer Übergangsperiode die Schrittweite, mit welcher die Sendeleistung der Mobilstation MS eingestellt wird, um einen bestimmten Betrag erhöht, so dass die einzustellende Sendeleistung schneller dem geforderten Sendeleistungssollwert angeglichen werden kann. Nach Ablauf dieser Übergangsperiode T wird die Schrittweite wieder auf den ursprünglichen Wert zurückgesetzt.

Die Dauer T der Übergangsperiode und/oder der Wert dieser erhöhten Schrittweite wird vorzugsweise an die durch die veränderten "Gain"-Faktoren angeforderte Sendeleistungsveränderung angepasst, d.h. je stärker die durch die veränderten "Gain"-Faktoren angeforderte Sendeleistungsänderung ist, desto länger kann die Dauer T der Übergangsperiode gewählt werden und/oder desto stärker kann die Schrittweite während dieser Übergangsperiode erhöht werden.

Ein ähnliches Verfahren wird nach dem derzeitigen Stand der UMTS-Spezifikation nach einer Übertragungslücke angewandt. Die Übergangsperiode wird dort auch "Recovery Period" oder Wieder-Einschwing-Periode genannt. Ein Aspekt der vorliegenden Erfindung besteht darin, die in der "Recovery Period" angewandten Verfahren auch nach Beendigung der Überschreitung/Unterschreitung der maximalen/minimalen Sendeleistung anzuwenden. Beispielhaft ist hier die Erhöhung der Schrittweite genannt, aber auch alle anderen für die "Recovery Period" bekannten Verfahren lassen sich auch auf den hier betrachteten Fall übertragen. Die Dauer der Übertragungslücke entspricht hierbei der Dauer der Über/Unterschreitung der maximalen/minimalen Sendeleistung.

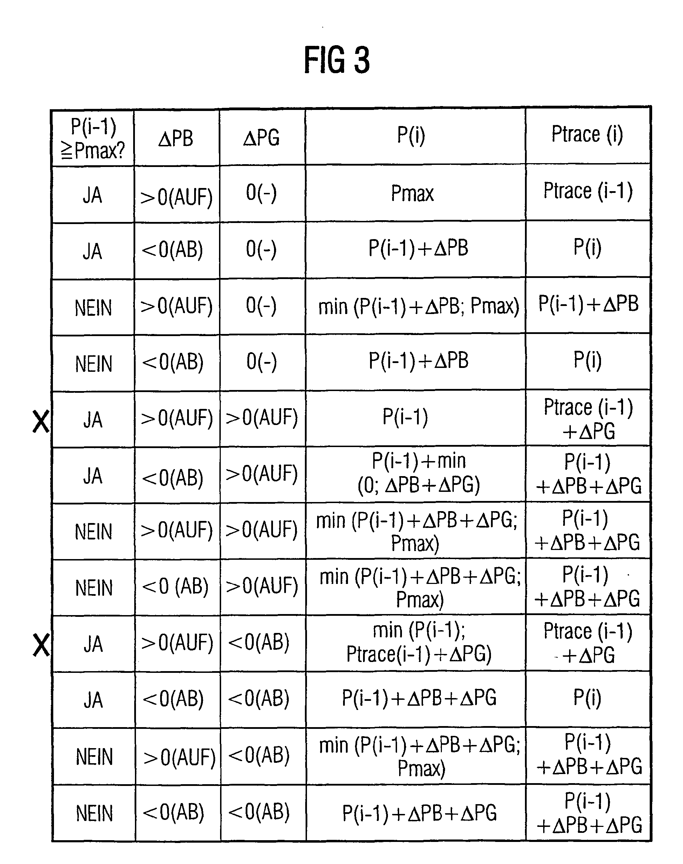

Die gesamte Gesetzmäßigkeit, welche an der oberen Sendeleistungsgrenze Pmax herrschen soll, ist in Figur 3 zusammengefasst. Dabei ist mit P(i) bzw. P(i-1) die Sendeleistung der Mobilstation MS zum Zeitpunkt i bzw. zum vorhergehenden Zeitpunkt bzw. Zeitschlitz i-1 bezeichnet. Analog bezeichnet Ptrace(i) bzw. Ptrace(i-1) den Wert der Variablen Ptrace zum Zeitpunkt i bzw. i-1. Mit ΔPB ist eine angeforderte Gesamtsendeleistungsveränderung der Mobilstation MS bezeichnet, welche auf einen von der Basisstation BS empfangenen Leistungsregelungsbefehl zurückgeht. Entsprechend ist durch ΔPG eine Gesamtsendeleistungsveränderung der Mobilstation MS bezeichnet, welche auf eine Neueinstellung der "Gain"-Faktoren zurückgeht. Gerade die mit einem Kreuz markierten Zeilen von Figur 3 spiegeln den Vorteil der vorliegenden Erfindung wider. Dabei ist aus Figur 3 ersichtlich, dass für den Fall einer bereits erfolgten Begrenzung auf den Wert der maximalen Sendeleistung Pmax die Variable Ptrace bei Vorliegen einer Sendeleistungsänderung aufgrund einer "Gain"-Faktor-Neueinstellung kontinuierlich angepasst und insbesondere bei einer Sendeleistungsreduktion in Folge einer "Gain-"-Faktor-Neueinstellung (ΔPB=0) die Sendeleistung auf den aktuellen Wert der Variablen Ptrace bzw. auf den vorhergehenden Wert der Sendeleistung (d.h. auf Pmax) eingestellt wird, je nachdem welcher Wert kleiner ist.

Mit Hilfe der zuvor beschriebenen Vorgehensweise kann somit an der maximalen Sendeleistungsgrenze Pmax die Einstellung einer zu geringen Sendeleistung bei Vorliegen einer Anforderung zur Verringerung der Sendeleistung aufgrund einer "Gain-"-Faktor-Neueinstellung verhindert werden.

Dies ist auch aus der Darstellung von Figur 2 ersichtlich, wobei beispielhaft die Einstellung der Sendeleistung unter Anwendung der vorliegenden Erfindung im Bereich der maximalen Sendeleistungsgrenze Pmax dargestellt ist. Mit schwarzen Dreiecken ist der Verlauf der Variablen Ptrace dargestellt, während mit schwarzen Kreisen der Verlauf der Sendeleistung gemäß dem herkömmlichen Verfahren angedeutet ist. Des weiteren ist mit weißen Kreisen der jeweilige Wert der Systemanforderung zur Veränderung der Sendeleistung aufgrund einer "Gain"-Faktor-Neueinstellung, d.h. ΔPG, dargestellt. Des weiteren ist mit einem Kreuz eine Sendeleistungsänderung bezeichnet, welche auf einen von der Mobilstation MS empfangenen Befehl zurückgeht. Die sich bei Anwendung des erfindungsgemäßen Verfahrens ergebende Einstellung der Sendeleistung P ist mit einer durchgezogenen Linie angedeutet.

Wie aus Figur 2 ersichtlich ist, bringt die zuvor beschriebene Vorgehensweise bis zum Zeitpunkt t = 14 keine Änderung mit sich. Genau zum Zeitpunkt t = 14 soll aufgrund einer veränderten "Gain"-Faktor-Neueinstellung die Sendeleistung geändert werden, beispielsweise weil zum Zeitpunkt t = 10 die vierfache Datenrate übertragen werden sollte, welche dann zum Zeitpunkt t = 14 wieder auf den ursprünglichen Wert absinkt. Gemäß dem Stand der Technik wäre die daraus resultierende Sendeleistungsdifferenz von etwa 6 dB zum Zeitpunkt t = 14 von dem Betrag des maximalen Sendeleistungsgrenzwerts Pmax = 33 dBm abgezogen worden, so dass anschließend mit einer zu niedrigen Leistung gesendet worden wäre, welche durch die nachfolgende Leistungsregelung wieder auf den korrekten Wert zurückgegangen wäre. Mit Hilfe der zuvor beschriebenen Vorgehensweise wird jedoch der aus den veränderten "Gain"-Faktoren resultierende Leistungsdifferenzwert von der Variablen Ptrace reduziert und die Sendeleistung zum Zeitpunkt t = 14 auf den daraus resultierenden Wert von Ptrace eingestellt, so dass mit Hilfe der vorliegenden Erfindung sofort der korrekte Sendeleistungswert bzw. der wahrscheinlichste Sendeleistungswert eingestellt werden kann.

Sollte die Mobilstation MS ein Unterschreiten der minimalen Sendeleistungsgrenze Pmin nicht zulassen, wird ähnlich zu dem zuvor beschriebenen Fall an der maximalen Sendeleistungsgrenze die Variable Ptrace mitgeführt, um anschließend bei einer Sendeleistungserhöhung aufgrund von veränderten "Gain"-Faktoren optimal den entsprechenden Leistungsdifferenzwert zu Ptrace hinzuzuaddieren und die Sendeleistung auf den daraus resultierenden Wert von Ptrace einstellen zu können. Auch in diesem Fall soll gelten, dass mit der Variablen Ptrace lediglich Anforderungen zur Veränderung der Sendeleistung verfolgt werden, welche auf eine veränderte Einstellung der "Gain"-Faktoren zurückgehen, d.h. von der Mobilstation empfangene Befehle zur Veränderung der Sendeleistung, welche auf SIR-Messungen zurückgehen, werden in der Variablen Ptrace nicht berücksichtigt, solange mit minimaler Leistung gesendet wird. Ist die Sendeleistung der Mobilstation MS bereits auf den Wert der minimalen Sendeleistungsgrenze Pmin beschränkt und empfängt die Mobilstation MS von der Basisstation BS einen Befehl zur Erhöhung der Sendeleistung, soll der entsprechende Leistungsdifferenzwert analog zum Stand der Technik zu dem Wert der minimalen Sendeleistungsgrenze Pmin hinzuaddiert und die Sendeleistung der Mobilstation entsprechend eingestellt werden. Sollte hingegen eine Anforderung des Systems zur Sendeleistungserhöhung aufgrund von veränderten "Gain"-Faktoren vorliegen, wird der entsprechende Leistungsdifferenzwert zu dem Wert der Variablen Ptrace hinzuaddiert und die Sendeleistung des Systems entsprechend eingestellt (sofern die Sendeleistung größer als der Wert der minimalen Sendeleistungsgrenze Pmin ist). Sollte die Mobilstation MS die Sendeleistung aufgrund von veränderten "Gain"-Faktoren verändern wollen, obwohl Ptrace bereits unterhalb der minimalen Sendeleistungsgrenze Pmin ist, soll trotzdem der entsprechende Leistungsdifferenzwert auf Ptrace addiert werden, um die Variable Ptrace entsprechend anzupassen.

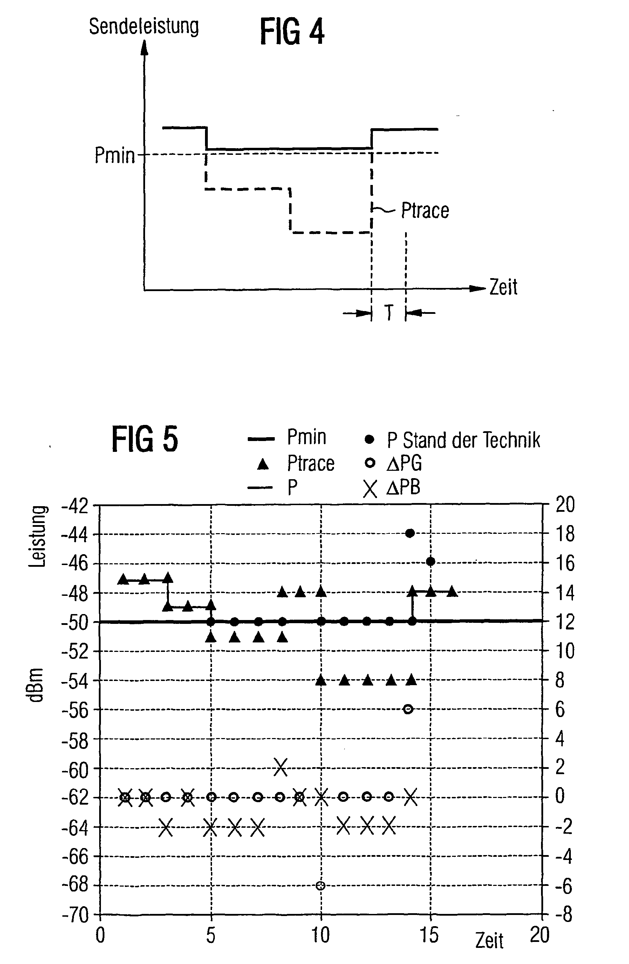

Die Darstellung von Figur 4 verdeutlicht den zuvor beschriebenen Sachverhalt an der minimalen Sendeleistungsgrenze Pmin analog zur Darstellung von Figur 1. Wie aus Figur 4 ersichtlich ist, wird mit der Variablen Ptrace jede "Gain"-Faktor-Neueinstellung während einer bereits erfolgten Begrenzung auf den Wert der minimalen Sendeleistungsgrenze Pmin verfolgt.

Auch bei dem in Figur 4 dargestellten Ausführungsbeispiel wird erfindungsgemäß nach Verlassen des Sendeleistungsgrenzwerts, im vorliegenden Fall nach Überschreiten der minimalen Sendeleistungsgrenze Pmin, eine Übergangsperiode T vorgesehen, in welcher die Schrittweite, mit der die Sendeleistung der Mobilstation MS eingestellt bzw. geregelt wird, gegenüber dem Normalbetrieb erhöht wird. Auch in diesem Fall wird nach Ablauf der Übergangsperiode T die Schrittweite wieder auf den ursprünglichen Wert zurückgesetzt. Hinsichtlich der Wahl der Länge T der Übergangsperiode bzw. des Werts der erhöhten Schrittweite gilt das zuvor zu Figur 1 Gesagte, so dass an dieser Stelle auf die Beschreibung zu Figur 1 verwiesen werden kann.

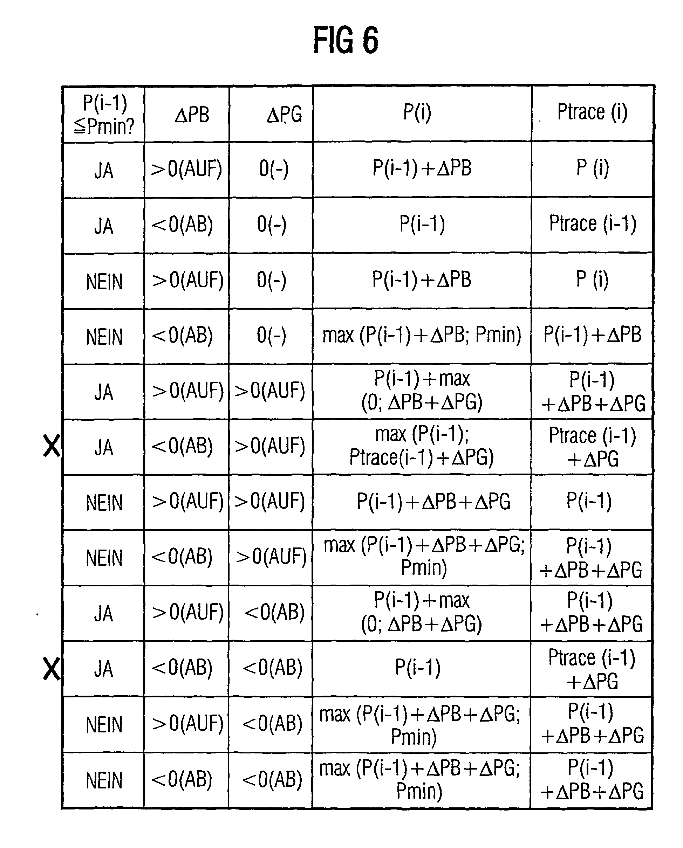

In Figur 6 ist analog zu Figur 3 die gesamte Gesetzmäßigkeit an der minimalen Sendeleistungsgrenze Pmin zusammengefasst, wobei wiederum die mit einem Kreuz gekennzeichneten Zeilen die Vorteile der vorliegenden Erfindung widerspiegeln.

Des weiteren ist in Figur 5 analog zu Figur 2 ein möglicher Verlauf der Sendeleistung P bei Anwendung des zuvor beschriebenen Verfahrens im Bereich der minimalen Sendeleistungsgrenze Pmin dargestellt. Die Symbole besitzen dabei dieselbe Bedeutung wie in Figur 2. Wie aus Figur 5 ersichtlich ist, würde die Mobilstation MS zum Zeitpunkt t = 14 bei einer Anforderung zur Erhöhung der Sendeleistung aufgrund von veränderten "Gain"-Faktoren mit einer zu hohen Sendeleistung senden, während mit Hilfe der Variablen Ptrace die Sendeleistung zum Zeitpunkt t = 14 sofort auf den richtigen Wert eingestellt werden kann.

Die Darstellungen von Figur 4 - Figur 6 gelten für den Fall, dass die Mobilstation MS ein Unterschreiten der minimalen Sendeleistungsgrenze Pmin analog zum Fall der maximalen Sendeleistungsgrenze Pmax nicht zulässt. Sollte die Mobilstation MS jedoch ein Unterschreiten der minimalen Sendeleistungsgrenze Pmin entsprechend den von der Basisstation BS empfangenen Leistungsregelungsbefehlen einschließlich einer entsprechenden Skalierung dieser Leistungsregelungsbefehle zulassen, sind mehrere Verfahren denkbar:

Vereinfacht könnte stets die Variable Ptrace gleich der tatsächlichen (skalierten) Sendeleistung der Mobilstation gesetzt werden. Dadurch würde zwar das eingangs beschriebene Problem einer unbeabsichtigten Sendeleistungseinstellung nach Verlassen der minimalen Sendeleistungsgrenze Pmin nicht gelöst werden, das Problem würde jedoch in diesem Fall auch nur in abgeschwächter Art und Weise bestehen.

Des weiteren könnte sinngemäß die Variable Ptrace zum Nachführen der Sendeleistungsänderung aufgrund von "Gain"-Faktor-Neueinstellungen äquivalent zu Figur 1 und Figur 4 verwendet werden. Dies hätte jedoch entsprechend kompliziertere Gesetzmäßigkeiten als in den in Figur 3 und Figur 4 gezeigten Fällen zur Folge. Zudem gäbe es eine Vielzahl von Methoden, diese Gesetzmäßigkeit zu definieren.

Die einfachste Lösung, insbesondere für den UMTS-Mobilfunkstandard, wäre es, die Variable Ptrace stets der aktuellen Sendeleistung der Mobilstation MS gleichzusetzen, was eine dem eingangs beschriebenen Stand der Technik entsprechende Vorgehensweise darstellen würde.

Ein grundlegendes mit der Sendeleistungsregelung verbundenes Problem besteht darin, dass die von der Mobilstation MS empfangenen Leistungsregelungsbefehle mit Fehlern belastet sein können, wobei ein typischer Wert für die Fehlerwahrscheinlichkeit 4 % beträgt. Dies könnte bei dem zuvor beschriebenen Verfahren, bei dem die Sendeleistung der Mobilstation MS unter Berücksichtigung der Variablen Ptrace eingestellt wird, dazu führen, dass der Wert der Variablen Ptrace infolge eines empfangenen Leistungsregelungsbefehls irrtümlich an der oberen Sendeleistungsgrenze Pmax derart verringert bzw. an der unteren Sendeleistungsgrenze Pmin derart erhöht wird, dass infolge dieser Veränderung der Variablen Ptrace anschließend die Regelung der Sendeleistung der Mobilstation MS genauso wie bei dem herkömmlichen Verfahren, bei dem die Variable Ptrace nicht berücksichtigt wird, abläuft. Dies ist immer dann der Fall, wenn die Variable Ptrace im Bereich der oberen Sendeleistungsgrenze Pmax auf einen Wert Ptrace = Pmax bzw. im Bereich der unteren Sendeleistungsgrenze Pmin auf einen Wert Ptrace = Pmin zurückgesetzt wird. Dabei ist ferner zu bedenken, dass in der Regel die Situation einer durch die Veränderung der "Gain"-Faktoren bewirkten und von der verfügbaren Sendeleistung abweichenden angeforderten Sendeleistung über mindestens einen Zeitrahmen, d.h. in UMTS-Mobilfunksystemen über mindestens 15 Zeitschlitze bzw. 15 Leistungsregelungsbefehle, vorliegt, da die "Gain"-Faktoren nur am Beginn eines Zeitrahmens berechnet werden. Die Wahrscheinlichkeit, dass mindestens einer dieser 15 Leistungsregelungsbefehle fehlerhaft empfangen wird, beträgt bereits 46 %.

Um das zuvor beschriebene Problem beseitigen bzw. abschwächen zu können, sind verschiedene Möglichkeiten denkbar, welche nachfolgend näher erläutert werden sollen.

Eine effiziente Möglichkeit zur Vermeidung einer irrtümlichen Veränderung der Variablen Ptrace besteht darin, die Variable Ptrace nur dann entsprechend dem empfangenen Leistungsregelungsbefehl zu verändern bzw. zurückzusetzen, wenn mindestens zwei aufeinanderfolgende Leistungsregelungsbefehle eine derartige Veränderung erfordern. Bei einer angenommenen Fehlerwahrscheinlichkeit von ca. 4 % für einen einzelnen Leistungsregelungsbefehl beträgt die Wahrscheinlichkeit, dass zwei aufeinerfolgende Leistungsregelungsbefehle fehlerhaft sind, nur noch 0,16 %, so dass mit dieser Vorgehensweise die Wahrscheinlichkeit für eine irrtümliche Veränderung der Variablen Ptrace deutlich reduziert werden kann. Selbst die Wahrscheinlichkeit, dass in 15 aufeinanderfolgenden Leistungsregelungsbefehlen ein fehlerhaftes Paar von aufeinanderfolgenden Leistungsregelungsbefehlen enthalten ist, beträgt nur noch 2,4 %, was einen durchaus akzeptablen Wert darstellt.

Eine weitere Möglichkeit zur Vermeidung einer irrtümlichen Veränderung bzw. Zurücksetzung der Variablen Ptrace besteht darin, den Wert von Ptrace nur dann zurückzusetzen, wenn von m aufeinanderfolgenden Leistungsregelungsbefehlen, welche von der Mobilstation MS empfangen werden, mindestens n Leistungsregelungsbefehle eine entsprechende Veränderung der Variablen Ptrace anfordern. Beispielhafte Werte für die Parameter n bzw. m können beispielsweise n = 2 und m = 3 oder n = 3 und m = 5 etc. sein.

Die beiden zuvor beschriebenen Möglichkeiten können auch grundsätzlich auf die Sendeleistungsregelung der Mobilstation MS angewendet werden, so dass die von der Mobilstation erzeugte Sendeleistung nur dann verringert wird, wenn mindestens zwei aufeinanderfolgende Leistungsregelungsbefehle oder von m Leistungsregelungsbefehlen mindestens n Leistungsregelungsbefehle dies erfordern.

Gemäß einem weiteren Ausführungsbeispiel ist zur Vermeidung einer irrtümlichen Veränderung der Variablen Ptrace bzw. einer unbeabsichtigten Zurücksetzung der Variablen Ptrace im Bereich der oberen Sendeleistungsgrenze Pmax bzw. der unteren Sendeleistungsgrenze Pmin vorgesehen, nicht nur den Inhalt der empfangenen Leistungsregelungsbefehle, d.h. in der Regel deren Polarität, zu berücksichtigen, sondern zudem auch eine Abschätzung für die Richtigkeit der empfangenen Leistungsregelungsbefehle durchzuführen. Dies kann beispielsweise durch Auswertung der Amplitude des von der Mobilstation MS empfangenen Signals geschehen, da für einen Leistungsregelungsbefehl die Amplitude des Empfangssignals in der Regel zwischen einem oberen und einem unteren Grenzwert liegen muss. Liegt die Amplitude des Empfangssignals am oberen Grenzwert, bedeutet dies für die Mobilstation MS, dass sie die Sendeleistung um die zuvor erwähnte bestimmte Schrittweite erhöhen muss, während die Mobilstation MS die Sendeleistung um die bestimmte Schrittweite reduzieren muss, falls die Amplitude des Empfangssignals im Bereich des unteren Grenzwerts liegt. Stellt nunmehr die Mobilstation MS fest, dass das Empfangssignal für den Leistungsregelungsbefehl bzw. das entsprechende Kommando eine relativ geringe Amplitude aufweist, kann die Mobilstation davon ausgehen, dass in diesem Fall das Kommando zumindest mit einer nicht zu vernachlässigenden Wahrscheinlichkeit nicht korrekt übertragen worden ist. Für die Veränderung der Variablen Ptrace werden von der Mobilstation MS dann lediglich diejenigen Leistungsregelungsbefehle verwendet, welche mit ausreichender Wahrscheinlichkeit als korrekt empfangen eingestuft worden sind. Somit kann bereits eine relativ kleine Anzahl (im Extremfall ein einziger) von mit hoher Wahrscheinlichkeit als korrekt empfangen eingestuften Leistungsregelungsbefehlen eine entsprechende Veränderung bzw. Zurücksetzung der Variablen Ptrace bewirken, während hierzu Leistungsregelungsbefehle mit geringerer Verlässlichkeit in größerer Anzahl erforderlich sind.

Schließlich besteht eine weitere Möglichkeit zur Vermeidung einer irrtümlichen Veränderung der Variablen Ptrace darin, die Variable Ptrace bei Vorliegen einer der oben genannten Bedingungen bzw. allgemein bei Empfang eines entsprechenden Leistungsregelungsbefehls nicht sofort vollständig entsprechend dem empfangenen Leistungsregelungsbefehl anzupassen, sondern die Variable Ptrace zunächst nur teilweise zu verändern. Dabei kann beispielsweise vorgesehen sein, die Variable Ptrace zunächst lediglich um einen vorgegebenen Maximalbetrag, beispielsweise um 6 dB, zu verändern. Ebenso ist denkbar, die Variable Ptrace in Übereinstimmung mit dem empfangenen Leistungsregelungsbefehl zunächst lediglich um einen Wert zu reduzieren (im Bereich der oberen Sendeleistungsgrenze Pmax) bzw. zu erhöhen (im Bereich der unteren Sendeleistungsgrenze Pmin), welcher von der Differenz zwischen dem augenblicklichen Wert der Variablen Ptrace und dem jeweiligen Sendeleistungsgrenzwert Pmax bzw. Pmin abhängig gemacht wird. Diesbezüglich kann die Variable Ptrace beispielsweise in diesem Fall zunächst lediglich um den halben Differenzwert zwischen dem augenblicklichen Wert der Variablen Ptrace und dem jeweiligen Sendeleistungsgrenzwert entsprechend dem jeweils empfangenen Leistungsregelungsbefehl verändert werden. Gemäß einer Variante dieses Ausführungsbeispiels ist es auch denkbar, dass die Mobilstation MS den Grad der Veränderung der Variablen Ptrace von der Zeitdauer abhängig macht, welche seit dem Überschreiten der maximalen Sendeleistungsgrenze Pmax bzw. Unterschreiten der minimalen Sendeleistungsgrenze Pmin durch die Variable Ptrace vergangen ist.

Selbstverständlich können die zuvor beschriebenen Ausführungsbeispiele für eine Vermeidung einer irrtümlichen Zurücksetzung bzw. Veränderung der Variablen Ptrace auch auf geeignete Art und Weise miteinander kombiniert werden.

## Patentansprüche

1. Verfahren zur Regelung der Sendeleistung in einem Funksystem,
a) wobei von einem Sender (MS) ein Sendesignal über einen Übertragungskanal gesendet wird,
b) wobei von einem Empfänger (BS) das Sendesignal des Senders (MS) empfangen und ausgewertet wird, um davon abhängig einen Leistungsregelungsbefehl zur Regelung der Sendeleistung des Senders (MS) zu erzeugen und an den Sender (MS) zu übertragen, und
c) wobei die Sendeleistung des Senders (MS) unter Berücksichtigung eines empfangenen Leistungsregelungsbefehls und eines augenblicklichen Werts mindestens eines Parameters, welcher das Verhältnis von einem Sendeleistungsanteil eines dem Übertragungskanal zugeordneten Steuerkanals und einem Sendeleistungsanteil von dem Übertragungskanal zugeordneten Datenkanälen beschreibt, mit einer bestimmten Schrittweite eingestellt wird, wobei die Sendeleistung des Senders (MS) bei Erreichen bzw. Überschreiten eines maximalen Grenzwerts (Pmax) oder Erreichen bzw. Unterschreiten eines minimalen Grenzwerts (Pmin) gemäß einem bestimmten Skalierungsverfahren skaliert wird,
**dadurch gekennzeichnet,**
**dass** für den Fall, dass infolge einer Veränderung des Parameters der maximale Grenzwert (Pmax) wieder unterschritten bzw. der minimale Grenzwert (Pmin) wieder überschritten wird, die Geschwindigkeit, insbesondere die Schrittweite, mit welcher die Sendeleistung des Senders (MS) eingestellt wird, während einer bestimmten Übergangsperiode (T) vorübergehend erhöht wird.

2. Verfahren nach Anspruch 1,
**dadurch gekennzeichnet,**
**dass** die Einstellung der Sendeleistung des Senders (MS) im Normalbetrieb mit einer bestimmten ersten Schrittweite erfolgt, und
**dass** die Einstellung der Sendeleistung des Senders (MS) während der Übergangsperiode (T) vorübergehend mit einer bestimmten zweiten Schrittweite, welche größer als die erste Schrittweite ist, erfolgt,
wobei die Einstellung der Sendeleistung des Senders (MS) nach der Übergangsperiode (T) wieder mit der ersten Schrittweite erfolgt.

3. Verfahren nach Anspruch 1 oder 2,
**dadurch gekennzeichnet,**
**dass** der Wert der Schrittweite, mit welcher die Sendeleistung des Senders (MS) während der Übergangsperiode (T) eingestellt wird, in Abhängigkeit von dem Wert des Parameters gewählt wird.

4. Verfahren nach Anspruch 3,
**dadurch gekennzeichnet,**
**dass** die Schrittweite, mit welcher die Sendeleistung des Senders (MS) während der Übergangsperiode (T) eingestellt wird, umso stärker erhöht wird, je größer die einer Veränderung des Parameters entsprechende Veränderung der Sendeleistung ist.

5. Verfahren nach einem der vorhergehenden Ansprüche,
**dadurch gekennzeichnet,**
**dass** die Dauer der Übergangsperiode (T) in Abhängigkeit von dem Wert des Parameters gewählt wird.

6. Verfahren nach Anspruch 5,
**dadurch gekennzeichnet,**
**dass** die Dauer der Übergangsperiode (T) umso größer gewählt wird, je größer die einer Veränderung des Parameters entsprechende Veränderung der Sendeleistung ist.

7. Verfahren nach einem der vorhergehenden Ansprüche,
**dadurch gekennzeichnet,**
**dass** bei Erreichen bzw. Überschreiten des maximalen Grenzwerts (Pmax) oder Erreichen bzw. Unterschreiten des minimalen Grenzwerts (Pmin) der einer Veränderung des Parameters tatsächlich entsprechende, unskalierte Sendeleistungswert (Ptrace) ermittelt wird, und
**dass** der unskalierte Sendeleistungswert (Ptrace) bei der Einstellung der Sendeleistung des Senders (MS) im Schritt c) berücksichtigt wird, falls infolge einer Veränderung des Parameters der maximale Grenzwert (Pmax) wieder unterschritten bzw. der minimale Grenzwert (Pmin) wieder überschritten wird.

8. Verfahren nach Anspruch 7,
**dadurch gekennzeichnet,**
**dass** im Schritt c) die Sendeleistung des Senders (MS) auf den unskalierten Sendeleistungswert (Ptrace) eingestellt wird, falls infolge einer Veränderung des Parameters der maximale Grenzwert (Pmax) wieder unterschritten bzw. der minimale Grenzwert (Pmin) wieder überschritten wird.

9. Verfahren nach Anspruch 7 oder 8,
**dadurch gekennzeichnet,**
**dass** im Schritt c) die Sendeleistung des Senders (MS) auf den maximalen Grenzwert (Pmax) begrenzt wird, und
**dass** für den Fall, dass die Sendeleistung des Senders (MS) infolge einer Veränderung des Parameters weiter erhöht werden soll, der unskalierte Sendeleistungswert (Ptrace) entsprechend erhöht wird, die Sendeleistung des Senders (MS) jedoch weiterhin auf den maximalen Grenzwert (Pmax) begrenzt wird.

10. Verfahren nach einem der Ansprüche 7-9,
**dadurch gekennzeichnet,**
**dass** im Schritt c) die Sendeleistung des Senders (MS) auf den maximalen Grenzwert (Pmax) begrenzt wird, und
**dass** für den Fall, dass die Sendeleistung des Senders (MS) infolge einer Veränderung des Parameters verringert werden soll, der unskalierte Sendeleistungswert (Ptrace) entsprechend reduziert wird und die Sendeleistung des Senders (MS) auf den Minimalwert des maximalen Grenzwerts (Pmax) und des somit aktualisierten unskalierten Sendeleistungswerts (Ptrace) eingestellt wird.

11. Verfahren nach einem der Ansprüche 7-10,
**dadurch gekennzeichnet,**
**dass** im Schritt c) die Sendeleistung des Senders (MS) auf den minimalen Grenzwert (Pmin) begrenzt wird, und
**dass** für den Fall, dass die Sendeleistung des Senders (MS) infolge einer Veränderung des Parameters weiter reduziert werden soll, der unskalierte Sendeleistungswert (Ptrace) entsprechend reduziert wird und die Sendeleistung des Senders (MS) weiterhin auf den minimalen Grenzwert (Pmin) eingestellt wird.

12. Verfahren nach einem der Ansprüche 7-11,
**dadurch gekennzeichnet,**
**dass** im Schritt c) die Sendeleistung des Senders (MS) auf den minimalen Grenzwert (Pmin) begrenzt wird, und
**dass** für den Fall, dass die Sendeleistung des Senders (MS) infolge einer Veränderung des Parameters erhöht werden soll, der unskalierte Sendeleistungswert (Ptrace) entsprechend erhöht wird und die Sendeleistung des Senders (MS) auf den Maximalwert des minimalen Grenzwerts (Pmin) und des somit aktualisierten unskalierten Sendeleistungswerts (Ptrace) eingestellt wird.

13. Verfahren nach einem der Ansprüche 7-12,
**dadurch gekennzeichnet,**
**dass** der unskalierte Sendeleistungswert (Ptrace) in Übereinstimmung mit einem von dem Sender (MS) empfangenen Leistungsregelungsbefehl nur dann verändert wird, wenn mindestens zwei aufeinanderfolgende Leistungsregelungsbefehle eine entsprechende Veränderung des unskalierten Sendeleistungswerts (Ptrace) anfordern.

14. Verfahren nach einem der Ansprüche 7-12,
**dadurch gekennzeichnet,**
**dass** der unskalierte Sendeleistungswert (Ptrace) in Übereinstimmung mit einem von dem Sender (MS) empfangenen Leistungsregelungsbefehl nur dann verändert wird, wenn diese Veränderung von mehreren Leistungsregelungsbefehlen in einer Gruppe von m aufeinanderfolgenden Leistungsregelungsbefehlen angefordert wird.

15. Verfahren nach einem der Ansprüche 7-14,
**dadurch gekennzeichnet,**
**dass** die von dem Sender (MS) empfangenen Leistungsregelungsbefehle hinsichtlich ihrer Richtigkeit abgeschätzt werden und
**dass** der unskalierte Sendeleistungswert (Ptrace) in Übereinstimmung mit einem empfangenen Leistungsregelungsbefehl nur dann verändert wird, wenn die Veränderung des unskalierten Sendeleistungswerts (Ptrace) von einer bestimmten Anzahl von Leistungsregelungsbefehlen angefordert worden ist, für die jeweils ihre Richtigkeit mit einer bestimmten Mindestwahrscheinlichkeit abgeschätzt worden ist.

16. Verfahren nach einem der Ansprüche 7-15,
**dadurch gekennzeichnet,**
**dass** der unskalierte Sendleistungswert (Ptrace) bei Empfang eines Leistungsregelungsbefehls, welcher zu einer Veränderung des unskalierten Sendeleistungswerts (Ptrace) führt, zunächst nur teilweise gemäß dem empfangenen Leistungsregelungsbefehl verändert wird.

17. Verfahren nach Anspruch 16,
**dadurch gekennzeichnet,**
**dass** der unskalierte Sendeleistungswert (Ptrace) bei Empfang eines zur Veränderung des unskalierten Sendeleistungswerts (Ptrace) dienenden Leistungsregelungsbefehls zunächst lediglich um einen bestimmten Betrag verändert wird.

18. Verfahren nach Anspruch 16,
**dadurch gekennzeichnet,**
**dass** der unskalierte Sendeleistungswert (Ptrace) bei Empfangen eines zur Veränderung des unskalierten Sendeleistungswerts (Ptrace) dienenden Leistungsregelungsbefehls zunächst nur um einen Betrag verändert wird, welcher von dem Abstand zwischen dem unskalierten Sendeleistungswert (Ptrace) und dem maximalen Grenzwert (Pmax) bzw. dem minimalen Grenzwert (Pmin) abhängig gewählt wird.

19. Verfahren nach Anspruch 16,
**dadurch gekennzeichnet,**
**dass** der unskalierte Sendeleistungswert (Ptrace) bei Empfang eines zur Veränderung des unskalierten Sendeleistungswerts (Ptrace) dienenden Leistungsregelungsbefehls zunächst nur um einen Betrag verändert wird, welcher in Abhängigkeit von der seit dem Überschreiten des maximalen Grenzwerts (Pmax) bzw. dem Unterschreiten des minimalen Grenzwerts (Pmin) verstrichenen Zeitspanne gewählt wird.

20. Verfahren nach einem der vorhergehenden Ansprüche,
**dadurch gekennzeichnet,**
**dass** die Sendeleistung des Senders (MS) bei Empfang eines Leistungsregelungsbefehls nur dann in Übereinstimmung mit dem empfangenen Leistungsregelungsbefehl eingestellt wird, wenn mindestens zwei aufeinanderfolgende Leistungsregelungsbefehle eine entsprechende Veränderung der Sendeleistung anfordern oder wenn von einer Gruppe von m aufeinanderfolgenden Leistungsregelungsbefehlen mindestens eine bestimmte Anzahl der Leistungsregelungsbefehle eine entsprechende Veränderung der Sendeleistung anfordern.

21. Verfahren nach einem der vorhergehenden Ansprüche,
**dadurch gekennzeichnet,**
**dass** das Funksystem ein Mobilfunksystem, insbesondere ein UMTS-Mobilfunksystem, ist.

22. Verfahren nach einem der vorhergehenden Ansprüche,
**dadurch gekennzeichnet,**
**dass** der mindestens eine Parameter ein Gewichtungsparameter ist, welcher die Gewichtung des Sendeleistungsanteils des dem Übertragungskanal zugeordneten Steuerkanals oder die Gewichtung des Sendeleistungsanteils der dem Übertragungskanal zugeordneten Datenkanäle beschreibt.

23. Sendevorrichtung für ein Funksystem,
wobei die Sendevorrichtung (MS) derart ausgestaltet ist, dass sie Leistungsregelungsbefehle zur Regelung der eigenen Sendeleistung von einer weiteren Sendevorrichtung (BS) empfängt und die eigene Sendeleistung in Abhängigkeit von einem empfangenen Leistungsregelungsbefehl und dem augenblicklichen Wert mindestens eines Parameters, welcher das Verhältnis von einem Sendeleistungsanteil eines einem Übertragungskanal der Sendevorrichtung (BS) zugeordneten Steuerkanals und einem Sendeleistungsanteil von dem Übertragungskanal zugeordneten Datenkanälen beschreibt, mit einer bestimmten Schrittweite einstellt,
wobei die Sendevorrichtung (MS) die Sendeleistung bei Erreichen bzw. Überschreiten eines vorgegebenen maximalen Grenzwerts (Pmax) oder bei Erreichen bzw. Unterschreiten eines vorgegebenen minimalen Grenzwerts (Pmin) gemäß einem bestimmten Skalierungsverfahren skaliert,
**dadurch gekennzeichnet,**
**dass** die Sendevorrichtung (MS) derart ausgestaltet ist, dass sie für den Fall, dass infolge einer Veränderung des Parameters der maximale Grenzwert (Pmax) wieder unterschritten bzw. der minimale Grenzwert (Pmin) wieder überschritten wird, die Schrittweite, mit welcher die Sendeleistung eingestellt wird, während einer bestimmten Übergangsperiode (T) vorübergehend erhöht.

24. Sendevorrichtung nach Anspruch 23,
**dadurch gekennzeichnet,**
**dass** die Sendevorrichtung zur Durchführung des Verfahrens nach einem der Ansprüche 2-22 ausgestaltet ist.

## Claims

1. Method for controlling the transmission power in a communications system,
a) a transmission signal being transmitted by a transmitter (MS) via a transmission channel,
b) the transmission signal of the transmitter (MS) being received and evaluated by a receiver (BS) in order to produce in accordance therewith and transmit to the transmitter (MS) a power control command for controlling the transmission power of the transmitter (MS) and
c) the transmission power of the transmitter (MS), taking into account a power control command received and a current value of at least one parameter, which describes the ratio of a transmission power portion of a control channel which is associated with the transmission channel and a transmission power portion of data channels associated with the transmission channel, being adjusted with a specific step width, the transmission power of the transmitter (MS) being calibrated in accordance with a specific calibration method if a maximum limit value (Pmax) is reached or exceeded or if a minimum limit value (Pmin) is reached or fails to be reached,
**characterised in that**
if, owing to modification of the parameter, the maximum limit value (Pmax) fails to be reached again or the minimum limit value (Pmin) is exceeded again, the speed, in particular the step width with which the transmission power of the transmitter (MS) is adjusted, is temporarily increased for a specific transient period of time (T).

2. Method according to claim 1,
**characterised in that**
the adjustment of the transmission power of the transmitter (MS) is carried out with a specific first step width during normal operation, and
**in that** the adjustment of the transmission power of the transmitter (MS) during the transient period (T) is temporarily carried out with a specific second step width which is greater than the first step width,
the adjustment of the transmission power of the transmitter (MS) after the transient period (T) being carried out with the first step width again.

3. Method according to either claim 1 or claim 2,
**characterised in that**
the value of the step width with which the transmission power of the transmitter (MS) is adjusted during the transient period (T) is selected in accordance with the value of the parameter.

4. Method according to claim 3,
**characterised in that**
the step width with which the transmission power of the transmitter (MS) is adjusted during the transient period (T) is further increased the greater the increase in the transmission power modification corresponding to a modification of the parameter.

5. Method according to any one of the preceding claims,
**characterised in that**
the duration of the transient period (T) is selected in accordance with the value of the parameter.

6. Method according to claim 5,
**characterised in that**
the duration of the transient period (T) is selected to be greater the greater the increase in the transmission power modification corresponding to a modification of the parameter.

7. Method according to any one of the preceding claims,
**characterised in that**
when the maximum limit value (Pmax) is reached or exceeded or the minimum limit value (Pmin) is reached or fails to be reached, the non-calibrated transmission power value (Ptrace) which actually corresponds to a modification of the parameter is established, and
**in that** the non-calibrated transmission power value (Ptrace) is taken into account for the adjustment of the transmission power of the transmitter (MS) in step c) in the event that, owing to a modification of the parameter, the maximum limit value (Pmax) fails to be reached again or the minimum limit value (Pmin) is exceeded again.

8. Method according to claim 7,
**characterised in that**
in step c), the transmission power of the transmitter (MS) is adjusted to the non-calibrated transmission power value (Ptrace) in the event that, owing to a modification of the parameter, the maximum limit value (Pmax) fails to be reached again or the minimum limit value (Pmin) is exceeded again.

9. Method according to either claim 7 or claim 8,
**characterised in that**
in step c), the transmission power of the transmitter (MS) is limited to the maximum limit value (Pmax), and
**in that**, if the transmission power of the transmitter (MS) is intended to be further increased owing to a modification of the parameter, the non-calibrated transmission power value (Ptrace) is increased accordingly but the transmission power of the transmitter (MS) continues to be limited to the maximum limit value (Pmax).

10. Method according to any one of claims 7 to 9,
**characterised in that**
in step c), the transmission power of the transmitter (MS) is limited to the maximum limit value (Pmax), and
**in that**, if the transmission power of the transmitter (MS) is intended to be reduced owing to a modification of the parameter, the non-calibrated transmission power value (Ptrace) is reduced accordingly and the transmission power of the transmitter (MS) is adjusted to the minimum value of the maximum limit value (Pmax) and of the consequently updated non-calibrated transmission power value (Ptrace).

11. Method according to any one of claims 7 to 10,
**characterised in that**
in step c), the transmission power of the transmitter (MS) is limited to the minimum limit value (Pmin), and
**in that** if the transmission power of the transmitter (MS) is intended to be further reduced owing to a modification of the parameter, the non-calibrated transmission power value (Ptrace) is reduced accordingly and the transmission power of the transmitter (MS) continues to be adjusted to the minimum limit value (Pmin).

12. Method according to any one of claims 7 to 11,
**characterised in that**
in step c), the transmission power of the transmitter (MS) is limited to the minimum limit value (Pmin), and
**in that**, if the transmission power of the transmitter (MS) is intended to be increased owing to a modification of the parameter, the non-calibrated transmission power value (Ptrace) is increased accordingly and the transmission power of the transmitter (MS) is adjusted to the maximum value of the minimum limit value (Pmin) and of the consequently updated non-calibrated transmission power value (Ptrace).

13. Method according to any one of claims 7 to 12,
**characterised in that**
the non-calibrated transmission power value (Ptrace) is modified in accordance with a power control command received from the transmitter (MS) only if at least two sequential power control commands request a corresponding modification of the non-calibrated transmission power value (Ptrace).

14. Method according to any one of claims 7 to 12,
**characterised in that**
the non-calibrated transmission power value (Ptrace) is modified in accordance with a power control command received from the transmitter (MS) only when this modification is requested by a plurality of power control commands from a group of m sequential power control commands,

15. Method according to any one of claims 7 to 14,
**characterised in that**
the power control commands received from the transmitter (MS) are evaluated in terms of their accuracy, and
**in that** the non-calibrated transmission power value (Ptrace) is modified in accordance with a power control command received only when the modification of the non-calibrated transmission power value (Ptrace) has been requested by a specific number of power control commands for which the accuracy thereof has been evaluated in each case with a specific minimum level of probability.

16. Method according to any one of claims 7 to 15,
**characterised in that**
the non-calibrated transmission power value (Ptrace), on receiving a power control command which leads to a modification of the non-calibrated transmission power value (Ptrace), is first only partially modified in accordance with the power control command received.

17. Method according to claim 16,
**characterised in that**
the non-calibrated transmission power value (Ptrace), on receiving a power control command which serves to modify the non-calibrated transmission power value (Ptrace), is first modified only by a specific amount.

18. Method according to claim 16,
**characterised in that**
the non-calibrated transmission power value (Ptrace), on receiving a power control command which serves to modify the non-calibrated transmission power value (Ptrace), is first modified only by an amount which is selected in accordance with the distance between the non-calibrated transmission power value (Ptrace) and the maximum limit value (Pmax) or the minimum limit value (Pmin).

19. Method according to claim 16,
**characterised in that**
the non-calibrated transmission power value (Ptrace), on receiving a power control command which serves to modify the non-calibrated transmission power value (Ptrace), is first modified only by an amount which is selected in accordance with the period of time that has elapsed since the maximum limit value (Pmax) was exceeded or the minimum limit value (Pmin) failed to be reached.

20. Method according to any one of the preceding claims,
**characterised in that**
the transmission power of the transmitter (MS), on receiving a power control command, is adjusted in accordance with the received power control command only when at least two sequential power control commands request a corresponding modification of the transmission power or when, from a group of m sequential power control commands, at least a specific number of power control commands request a corresponding modification of the transmission power.

21. Method according to any one of the preceding claims,
**characterised in that**
the communications system is a mobile communications system, in particular a UMTS mobile communications system.

22. Method according to any one of the preceding claims,
**characterised in that**
the at least one parameter is a weighting parameter which describes the weighting of the transmission power portion of the control channel which is associated with the transmission channel or the weighting of the transmission power portion of the data channels which are associated with the transmission channel.

23. Transmission device for a communications system,
the transmission device (MS) being configured in such a manner that it receives power control commands for controlling its own transmission power from another transmission device (BS) and adjusts its own transmission power with a specific step width in accordance with a received power control command and in accordance with the current value of at least one parameter which describes the ratio of a transmission power portion of a control channel, which is associated with a transmission channel of the transmission device (BS), and a transmission power portion of data channels associated with the transmission channel,
the transmission device (MS) calibrating the transmission power in accordance with a specific calibration method when a predetermined maximum limit value (Pmax) is reached or exceeded or when a predetermined minimum limit value (Pmin) is reached or fails to be reached,
**characterised in that**
the transmission device (MS) is configured in such a manner that, in the event that the maximum limit value (Pmax) fails to be reached again or the minimum limit value (Pmin) is exceeded again owing to a modification of the parameter, it temporarily increases the step width with which the transmission power is adjusted for a specific transient period of time (T).

24. Transmission device according to claim 23,
**characterised in that**
the transmission device is configured to carry out the method according to any one of claims 2 to 22.

## Revendications

1. Procédé de régulation de la puissance d'émission dans un système radio,
a) un signal d'émission étant émis par un émetteur (MS) par l'intermédiaire d'un canal de transmission,
b) le signal d'émission de l'émetteur (MS) étant reçu et évalué par un récepteur (BS) pour produire en fonction de cette évaluation une instruction de régulation de puissance en vue de la régulation de la puissance d'émission de l'émetteur (MS) et pour la transmettre à l'émetteur (MS), et
c) la puissance d'émission de l'émetteur (MS) étant réglée avec un certain pas en tenant compte d'une instruction de régulation de puissance reçue et d'une valeur instantanée d'au moins un paramètre qui décrit le rapport d'une part de puissance d'émission d'un canal de commande associé au canal de transmission et d'une part de puissance d'émission de canaux de données associés au canal de transmission, la puissance d'émission de l'émetteur (MS) étant graduée selon un procédé de graduation lorsqu'elle devient égale ou supérieure à une valeur limite maximale (Pmax) ou lorsqu'elle devient égale ou inférieure à une valeur limite minimale (Pmin),
**caractérisé par le fait que,**
si la puissance d'émission redevient inférieure à la valeur limite maximale (Pmax) ou supérieure à la valeur limite minimale (Pmin) suite à une variation du paramètre, on augmente provisoirement, pendant une période de transition (T) déterminée, la vitesse, notamment le pas, avec laquelle ou lequel la puissance d'émission de l'émetteur (MS) est réglée.

2. Procédé selon la revendication 1,
**caractérisé par le fait que**
le réglage de la puissance d'émission de l'émetteur (MS) lors du fonctionnement normal s'effectue avec un premier pas déterminé, et
le réglage de la puissance d'émission de l'émetteur (MS) pendant la période de transition (T) s'effectue provisoirement avec un deuxième pas déterminé qui est supérieur au premier pas,
le réglage de la puissance d'émission de l'émetteur (MS) après la période de transition (T) s'effectuant à nouveau avec le premier pas.

3. Procédé selon la revendication 1 ou 2,
**caractérisé par le fait que**
la valeur du pas avec laquelle la puissance d'émission de l'émetteur (MS) est réglée pendant la période de transition (T) est choisie en fonction de la valeur du paramètre.

4. Procédé selon la revendication 3,
**caractérisé par le fait que**
le pas avec lequel la puissance d'émission de l'émetteur (MS) est réglée pendant la période de transition (T) est d'autant plus augmenté que la variation de puissance d'émission correspondant à une variation du paramètre est grande.

5. Procédé selon l'une des revendications précédentes,
**caractérisé par le fait que**
la durée de la période de transition (T) est choisie en fonction de la valeur du paramètre.

6. Procédé selon la revendication 5,
**caractérisé par le fait que**
la durée de la période de transition (T) est choisie d'autant plus grande que la variation de puissance d'émission correspondant à une variation du paramètre est grande.

7. Procédé selon l'une des revendications précédentes,
**caractérisé par le fait que**
lorsque la puissance d'émission devient égale ou supérieure à la valeur limite maximale (Pmax) ou lorsqu'elle devient égale ou inférieure à la valeur limite minimale (Pmin), on détermine une valeur de puissance d'émission non graduée (Ptrace) correspondant effectivement à une variation du paramètre, et
on tient compte de la valeur de puissance d'émission non graduée (Ptrace) lors du réglage de la puissance d'émission de l'émetteur (MS) à l'étape c) si la puissance d'émission redevient inférieure à la valeur limite maximale (Pmax) ou supérieure à la valeur limite minimale (Pmin) suite à une variation du paramètre.

8. Procédé selon la revendication 7,
**caractérisé par le fait que,**
à l'étape c), on règle la puissance d'émission de l'émetteur (MS) sur la valeur de puissance d'émission non graduée (Ptrace) si la puissance d'émission redevient inférieure à la valeur limite maximale (Pmax) ou supérieure à la valeur limite minimale (Pmin) suite à une variation du paramètre.

9. Procédé selon la revendication 7 ou 8,
**caractérisé par le fait que**
à l'étape c), on limite la puissance d'émission de l'émetteur (MS) à la valeur limite maximale (Pmax), et
si la puissance d'émission de l'émetteur (MS) doit être encore augmentée suite à une variation du paramètre, on augmente de façon correspondante la valeur de puissance d'émission non graduée (Ptrace) mais on limite encore la puissance d'émission de l'émetteur (MS) à la valeur limite maximale (Pmax).

10. Procédé selon l'une des revendications 7 à 9,
**caractérisé par le fait que**
à l'étape c), on limite la puissance d'émission de l'émetteur (MS) à la valeur limite maximale (Pmax), et
si la puissance d'émission de l'émetteur (MS) doit être diminuée suite à une variation du paramètre, on diminue de façon correspondante la valeur de puissance d'émission non graduée (Ptrace) et on règle la puissance d'émission de l'émetteur (MS) au minimum de la valeur limite maximale (Pmax) et de la valeur de puissance d'émission non graduée (Ptrace) ainsi actualisée.

11. Procédé selon l'une des revendications 7 à 10,
**caractérisé par le fait que**
à l'étape c), on limite la puissance d'émission de l'émetteur (MS) à la valeur limite minimale (Pmin), et
si la puissance d'émission de l'émetteur (MS) doit être encore diminuée suite à une variation du paramètre, on diminue de façon correspondante la valeur de puissance d'émission non graduée (Ptrace) et on règle encore la puissance d'émission de l'émetteur (MS) à la valeur limite minimale (Pmin).

12. Procédé selon l'une des revendications 7 à 11,
**caractérisé par le fait que**
à l'étape c), on limite la puissance d'émission de l'émetteur (MS) à la valeur limite minimale (Pmin), et
si la puissance d'émission de l'émetteur (MS) doit être augmentée suite à une variation du paramètre, on augmente de façon correspondante la valeur de puissance d'émission non graduée (Ptrace) et on règle la puissance d'émission de l'émetteur (MS) au maximum de la valeur limite minimale (Pmin) et de la valeur de puissance d'émission non graduée (Ptrace) ainsi actualisée.

13. Procédé selon l'une des revendications 7 à 12,
**caractérisé par le fait que**
la valeur de puissance d'émission non graduée (Ptrace) n'est modifiée conformément à une instruction de régulation de puissance reçue par l'émetteur (MS) que si au moins deux instructions de régulation de puissance successives demandent une modification correspondante de la valeur de puissance d'émission non graduée (Ptrace).

14. Procédé selon l'une des revendications 7 à 12,
**caractérisé par le fait que**
la valeur de puissance d'émission non graduée (Ptrace) n'est modifiée conformément à une instruction de régulation de puissance reçue par l'émetteur (MS) que si cette modification est demandée par plusieurs instructions de régulation de puissance dans un groupe de m instructions de régulation de puissance successives.

15. Procédé selon l'une des revendications 7 à 14,
**caractérisé par le fait que**
les instructions de régulation de puissance reçues par l'émetteur (MS) sont évaluées pour connaître leur exactitude, et que la valeur de puissance d'émission non graduée (Ptrace) est modifiée conformément à une instruction de régulation de puissance reçue que si la modification de la valeur de puissance d'émission non graduée (Ptrace) a été demandée par un certain nombre d'instructions de régulation de puissance dont l'exactitude a été estimée à chaque fois avec une certaine probabilité minimale.

16. Procédé selon l'une des revendications 7 à 15,
**caractérisé par le fait que,**
lors de la réception d'une instruction de régulation de puissance qui entraîne une modification de la valeur de puissance d'émission non graduée (Ptrace), la valeur de puissance d'émission non graduée (Ptrace) n'est d'abord modifiée que partiellement selon l'instruction de régulation de puissance reçue.

17. Procédé selon la revendication 16,
**caractérisé par le fait que,**
lors de la réception d'une instruction de régulation de puissance servant à la modification de la valeur de puissance d'émission non graduée (Ptrace), la valeur de puissance d'émission non graduée (Ptrace) n'est d'abord modifiée que d'une certaine valeur.

18. Procédé selon la revendication 16,
**caractérisé par le fait que,**
lors de la réception d'une instruction de régulation de puissance servant à la modification de la valeur de puissance d'émission non graduée (Ptrace), la valeur de puissance d'émission non graduée (Ptrace) n'est d'abord modifiée que d'une certaine valeur qui est choisie en fonction de l'écart entre la valeur de puissance d'émission non graduée (Ptrace) et la valeur limite maximale (Pmax) ou la valeur limite minimale (Pmin).

19. Procédé selon la revendication 16,
**caractérisé par le fait que,**
lors de la réception d'une instruction de régulation de puissance servant à la modification de la valeur de puissance d'émission non graduée (Ptrace), la valeur de puissance d'émission non graduée (Ptrace) n'est d'abord modifiée que d'une certaine valeur qui est choisie en fonction du temps écoulé depuis que la puissance d'émission est devenue supérieure à la valeur limite maximale (Pmax) ou inférieure à la valeur limite minimale (Pmin).

20. Procédé selon l'une des revendications précédentes,
**caractérisé par le fait que,**
lors de la réception d'une instruction de régulation de puissance, la puissance d'émission de l'émetteur (MS) n'est réglée conformément à l'instruction de régulation de puissance reçue que si au moins deux instructions de régulation de puissance successives demandent une modification correspondante de la puissance d'émission ou si, parmi un groupe de m instructions de régulation de puissance successives, un certain nombre des instructions de régulation de puissance demandent une modification correspondante de la puissance d'émission.

21. Procédé selon l'une des revendications précédentes,
**caractérisé par le fait que**
le système radio est un système de radiocommunication mobile, notamment un système de radiocommunication mobile UMTS.

22. Procédé selon l'une des revendications précédentes,
**caractérisé par le fait que**
le, au moins un, paramètre est un paramètre de pondération qui décrit la pondération de la part de puissance d'émission du canal de commande associé au canal de transmission ou la pondération de la part de puissance d'émission des canaux de données associés au canal de transmission.

23. Dispositif d'émission pour un système radio,
le dispositif d'émission (MS) étant conçu de telle sorte qu'il reçoit d'un autre dispositif d'émission (BS) des instructions de régulation de puissance pour la régulation de sa propre puissance d'émission et qu'il règle avec un pas déterminé sa propre puissance d'émission en fonction d'une instruction de régulation de puissance reçue et de la valeur instantanée d'au moins un paramètre qui décrit le rapport d'une part de puissance d'émission d'un canal de commande associé au canal de transmission du dispositif d'émission (BS) et d'une part de puissance d'émission de canaux de données associés au canal de transmission,
le dispositif d'émission (MS) graduant la puissance d'émission selon un procédé de graduation déterminé lorsque celle-ci devient égale ou supérieure à une valeur limite maximale (Pmax) prédéterminée ou lorsque celle-ci devient égale ou inférieure à une valeur limite minimale (Pmin) prédéterminée,
**caractérisé par le fait que**
le dispositif d'émission (MS) est conçu de telle sorte que, si la puissance d'émission redevient inférieure à la valeur limite maximale (Pmax) ou supérieure à la valeur limite minimale (Pmin) suite à une variation du paramètre, le pas avec lequel la puissance d'émission est réglée est provisoirement augmenté pendant une période de transition (T) déterminée.

24. Dispositif d'émission selon la revendication 23,
**caractérisé par le fait que** le dispositif d'émission est conçu pour la mise en oeuvre du procédé selon l'une des revendications 2 à 22.
